# FASCICULE DE BREVET EUROPEEN

(11) **EP 3 525 906 B1**
(45) Date de publication et mention de la délivrance du brevet: **02.06.2021**
(21) Numéro de dépôt: 17783829.9
(22) Date de dépôt: 11.10.2017
(51) Int. Cl.: B01D 33/04, B01D 37/02, C02F 1/28, C02F 1/38

(54) **DISPOSITIF DE TRAITEMENT D'UN EFFLUENT ET PROCEDE DE TRAITEMENT D'UN EFFLUENT**
VORRICHTUNG ZUR BEHANDLUNG VON ABWASSER UND VERFAHREN ZUR BEHANDLUNG VON ABWASSER
DEVICE FOR TREATING AN EFFLUENT AND METHOD FOR TREATING AN EFFLUENT

(30) Priorité: 17.10.2016 FR 1660035
(43) Date de publication de la demande: 21.08.2019
(73) Titulaire: Suez International, 92040 Paris la Défense Cedex (FR)
(72) Inventeur: DOMENJOUD, Bruno, 92800 Puteaux (FR); MANIC, Gildas, 78400 Chatou (FR)
(74) Mandataire: Marks & Clerk France
(86) Numéro de dépôt international: PCT/EP2017/075902
(87) Numéro de publication internationale: WO 2018/073061

(56) Documents cités:
- EP-A2- 0 998 968
- WO-A1-2012/136213
- WO-A1-2016/107875
- WO-A2-2016/032344
- JP-A- 2002 336 609

## Description

L'invention se situe dans le domaine du traitement des eaux résiduaires, par exemple d'origine urbaine ou industrielle. L'invention concerne un dispositif de traitement d'un effluent, par exemple des eaux résiduaires. L'invention concerne également un procédé de traitement d'un effluent mettant en œuvre un tel dispositif de traitement d'un effluent.

### ETAT DE LA TECHNIQUE

L'épuration des eaux résiduaires comporte plusieurs étapes dont une étape de traitement primaire. Le traitement primaire a pendant longtemps utilisé majoritairement le principe physique de décantation pour séparer les matières solides de l'eau traitée et, parfois, la flottation pour certains types d'eaux industrielles. Récemment sont apparues sur le marché de nouvelles techniques de séparation employant le principe physique de la filtration.

En particulier, deux techniques de filtration sont employées.

Tout d'abord, il y a la filtration directe sur toile. La filtration sur toile s'effectue sur une toile en tissu synthétique composée d'ouvertures d'une taille inférieure ou égale à environ 55 µm. Ce type de filtration n'est pas dans le champ de l'invention.

Ensuite, il existe aussi la filtration primaire par séparation gravitaire sur toile rotative sans fin avec formation de gâteau. La demande de brevet EP 0 998 968 A2 décrit un tel procédé de filtration. Cette filtration s'opère sur une toile de maille grossière pouvant être comprise entre 90 et 800 µm sur laquelle se forme un gâteau de matière accumulée, à travers lequel la filtration a lieu. Autrement dit, selon la taille des particules dans l'eau à traiter, certaines particules de petite taille passent à travers les mailles de la toile et d'autres particules, de taille plus importante, s'accumule sur la toile. En s'accumulant, les particules peuvent former une ou plusieurs couches supplémentaires sur la toile, que l'on appelle gâteau.

La toile est montée sur un système de rotation. Lorsque le niveau d'eau à traiter devient élevé, la toile est mise en rotation de façon à ce que la partie chargée en boue soit nettoyée, par raclage, par couteau d'air et, le cas échéant, par jets d'eau pressurisée. Une toile propre est par la suite présentée à l'eau brute pour y être filtrée.

Une partie de la pollution particulaire contenue dans les eaux résiduaires offre une distribution granulométrique avec un pourcentage plus ou moins important de particules dont le diamètre est supérieur ou égal à 350 µm. De ce fait, la première couche de matière formant la base du gâteau se constitue très rapidement de particules grossières, créant à son tour une nouvelle couche offrant une porosité à l'eau beaucoup plus faible que la première couche. Le système de filtration sur gâteau est capable de filtrer à des seuils de coupure à moins de 30 µm, pour une maille de toile initiale de 350 µm.

Contrairement à une filtration directe offrant une toile assez fragile, la filtration sur gâteau utilise une maille grossière très résistante, avec des fibres solides. Le risque de déchirure est minime, malgré une exposition à une matrice d'eau pouvant être très abrasive. Il en résulte qu'il est nécessaire d'avoir une fraction de particules de taille supérieure à la maille de la toile pour constituer la première couche de gâteau.

Or, la granulométrie de la pollution particulaire peut varier sensiblement d'une eau résiduaire à l'autre et donc dans certains cas être défavorable en cela qu'elle offre très peu de particules de diamètre supérieur à 350 µm. De ce fait, un risque important apparait d'avoir un rendement très faible d'élimination de la pollution, les particules étant trop petites pour être retenue sur la toile. Elles traversent donc le système sans être retenues et sans former de gâteau.

La granulométrie des eaux résiduaires est un domaine très peu documenté, et il est difficile de connaître par avance et sans manipulations préalables l'efficacité de la filtration primaire. De ce fait, l'estimation des rendements à attendre est assez aléatoire, devant s'appuyer sur des abaques disponibles sans garantie de correspondre à la réalité du terrain.

Par ailleurs, le rendement réel de la machine est uniquement tributaire de la qualité de l'eau brute. L'exploitant n'a pas de possibilité d'action sur le mécanisme pour augmenter ou diminuer le taux de capture de la pollution particulaire.

Une solution existante utilisée pour améliorer l'efficacité du traitement primaire est de pré-conditionner chimiquement les eaux usées à l'aide d'une étape de coagulation et de floculation. Ce traitement permet d'une part de déstabiliser les particules fines colloïdes de l'eau, puis de les agréger à l'aide de polymère sous forme de flocs de diamètre de l'ordre du millimètre, permettant leur filtration sans problèmes sur une toile de 350 µm. Cette technique, largement employée dans le cas de la décantation primaire, permet de sécuriser les rendements d'élimination à des valeurs beaucoup plus élevées que ne l'attendraient des techniques séparatives sans conditionnement. Les inconvénients majeurs de ce conditionnement sont cependant nombreux. En effet, dans le cas d'une filtration primaire sans ajout de réactifs, les performances épuratoires sont subies et non maitrisées en cela qu'elles dépendent uniquement des caractéristiques des particules présentes dans l'eau à traiter. De plus, une telle solution nécessite l'aménagement de réacteurs dédiés à la coagulation et la floculation, avec des temps de séjour minimums à respecter et les équipements nécessaires à leur brassage. Il faut aussi prévoir des équipements supplémentaires pour le dosage des réactifs. En outre, la consommation de réactifs peut être importante puisque de 5 à 15 mg de Fer pur est nécessaire par litre traité, ainsi qu'une consommation en polymère de 1 à 2 mg par litre d'eau traitée. Il en résulte des coûts d'utilisation et des durées de filtration plus importants. Enfin, une surproduction de boues primaires minérale peut apparaitre, surproduction qui ne peut être valorisée en digestion, les boues étant dépourvues de toute capacité de production de méthane.

### EXPOSE DE L'INVENTION

L'invention vise à pallier tout ou partie des problèmes cités plus haut en proposant un dispositif de traitement des eaux résiduaires permettant de maitriser le rendement épuratoire de la filtration primaire, sans ajout de réactifs supplémentaires, le rendement ne dépendant alors que de la granulométrie de la pollution et de la maille de toile choisie.

A cet effet, l'invention a pour objet un dispositif de traitement d'un effluent composé de liquide et de particules solides en un effluent traité, caractérisé en ce qu'il comprend :
- un dispositif de filtration primaire par séparation gravitaire sur toile rotative ayant une entrée destinée à recevoir l'effluent à traiter et une première et une seconde sorties, le dispositif de filtration étant destiné à séparer l'effluent en un premier et un second flux, le premier flux comprenant l'effluent traité, le second flux comprenant des boues comprenant des particules solides de l'effluent à traiter, le premier flux quittant le dispositif de filtration par la première sortie,
- au moins un dispositif de recirculation destiné à faire recirculer au moins une partie des boues du second flux vers l'entrée du dispositif de filtration, ladite deuxième sortie étant reliée au au moins un dispositif de recirculation.

L'effet technique du dispositif de recirculation est d'augmenter la quantité de particules dans l'effluent à traiter et l'avantage qui en découle est d'augmenter la quantité de particules de petite taille pouvant être retenues sur la toile rotative. Ainsi le procédé selon l'invention présente l'avantage d'augmenter et de contrôler les performances de la filtration tout en s'affranchissant de l'ajout de réactifs additionnels.

Le dispositif de filtration comprend un premier filtre ayant une maille d'un premier diamètre destiné à retenir sur le premier filtre les particules solides de l'effluent à traiter ayant un diamètre supérieur au premier diamètre.

De plus, le premier filtre est configuré de façon à former, en combinaison avec les particules solides de l'effluent à traiter retenues sur le premier filtre, un second filtre ayant une porosité correspondant à un seuil de coupure inférieur au premier diamètre. L'effet technique de cette configuration du premier filtre est de permettre la formation du second filtre correspondant à un filtre ayant une maille de diamètre inférieur au premier diamètre afin de retenir les plus petites particules de l'effluent à traiter.

Enfin, le dispositif de traitement selon l'invention comprend un dispositif de séparation configuré pour séparer les particules des boues de l'effluent à traiter du second flux en fonction de leur taille ou de leur densité, de façon à faire recirculer vers l'entrée du dispositif de filtration les particules de taille ou de densité supérieure à une taille ou une densité prédéfinie.

Avantageusement, le dispositif de séparation comprend un hydrocyclone. L'avantage technique de l'hydrocyclone est de pouvoir séparer par force centrifuge les particules lourdes d'un liquide et de proposer une séparation avec un très bon rendement.

Avantageusement, le dispositif de traitement comprend un dispositif de dilution du second flux positionné en aval de la seconde sortie du dispositif de filtration. Le dispositif de dilution a pour effet technique de faciliter la ségrégation des particules de densité ou de taille importante et permet une pré-dilution des eaux avant le passage dans le dispositif de séparation. La dilution sera contrôlée par rapport à la qualité des boues produites, et se fera en reprenant une fraction de l'eau brute (par pompage ou gravitaire) mise en contact avec tout ou partie des boues produites, ce contact se faisant par mélangeur statique ou mécanique.

Avantageusement, le dispositif de traitement comprend en outre un dispositif d'ensemencement de l'effluent positionné en amont de l'entrée du dispositif de filtration et destiné à ensemencer des particules de diamètre supérieur à un deuxième diamètre préalablement défini de façon à augmenter la quantité de particules dans l'effluent pouvant contribuer à la formation du second filtre. Le dispositif d'ensemencement présente l'avantage d'augmenter la quantité de particules de petite taille pouvant être retenue par le premier et le second filtres.

Selon un autre mode de réalisation, le dispositif de traitement comprend une sonde de turbidité positionnée en amont de l'entrée du dispositif de filtration apte à fournir une mesure de turbidité de l'effluent, une sonde de turbidité positionnée en aval de la première sortie du dispositif de filtration apte à fournir une mesure de turbidité du premier flux, une pompe d'activation du dispositif de séparation, et un moyen d'asservissement de la pompe d'activation du dispositif de séparation en fonction de la mesure de turbidité du premier flux et/ou d'un écart entre la mesure de turbidité du premier flux et la mesure de turbidité de l'effluent. La présence des sondes et du moyen d'asservissement ont pour effet de permettre un asservissement de la pompe d'activation du dispositif de séparation en fonction des mesures effectuées par les sondes. Il en résulte un meilleur pilotage du dispositif de traitement de l'effluent en fonction du niveau de traitement souhaité.

Avantageusement, le dispositif de traitement comprend un calculateur destiné à calculer une performance de traitement en fonction de la mesure de turbidité du premier flux et la mesure de turbidité de l'effluent, et le moyen d'asservissement est configuré pour activer la pompe d'activation quand la performance de traitement atteint une première valeur de seuil prédéfinie et pour désactiver la pompe d'activation quand la performance de traitement atteint une seconde valeur de seuil prédéfinie. Le calculateur a pour effet de déterminer une performance de traitement. L'avantage qui en découle est de pouvoir asservir la pompe d'activation en fonction de la performance de traitement obtenue et de valeurs de seuil prédéfinies.

L'invention concerne aussi un procédé de traitement d'un effluent composé de liquide et de particules solides mettant en œuvre un dispositif de filtration primaire par séparation gravitaire sur toile rotative ayant une entrée destinée à recevoir l'effluent à traiter et une première et une seconde sorties, le dispositif de filtration comprenant un premier filtre ayant une maille d'un premier diamètre destiné à retenir sur le premier filtre les particules de l'effluent à traiter ayant un diamètre supérieur au premier diamètre, comprenant :
- une étape de séparation de l'effluent en premier et second flux, le premier flux comprenant l'effluent traité, le second flux comprenant des boues comprenant des particules solides de l'effluent à traiter, le premier flux quittant le dispositif de filtration par la première sortie et le second flux quittant le dispositif de filtration par la seconde sortie,
- une étape de recirculation d'au moins une partie des boues du second flux , destinées à être dirigées vers une unité de traitement, vers l'entrée du dispositif de filtration par un dispositif de recirculation,
- une étape de formation d'un second filtre à partir du premier filtre et des particules de l'effluent à traiter retenues sur le premier filtre, le second filtre ayant une porosité correspondant à un seuil de coupure inférieur au premier diamètre, une étape de séparation des particules du second flux en fonction de leur taille ou de leur densité par un dispositif de séparation, de façon à faire recirculer vers l'entrée du dispositif de filtration les particules de l'effluent à traiter de taille ou de densité supérieure à une taille ou une densité prédéfinie.

Avantageusement, le procédé de traitement comprend une étape de dilution du second flux en aval de la seconde sortie du dispositif de filtration.

Avantageusement, le procédé de traitement comprend une étape d'ensemencement de l'effluent en amont du dispositif de filtration de particules de diamètre supérieur à un deuxième diamètre préalablement défini de façon à augmenter la quantité de particules dans l'effluent pouvant contribuer à la formation du second filtre.

Avantageusement, le procédé de traitement comprend une étape de mesure de turbidité de l'effluent par une sonde de turbidité positionnée en amont de l'entrée du dispositif de filtration primaire, une étape de mesure de turbidité du premier flux par une sonde de turbidité positionnée en aval de la première sortie du dispositif de filtration primaire, une étape d'activation, de modulation en intensité ou de désactivation du dispositif de séparation par une pompe d'activation, et une étape d'asservissement de la pompe d'activation du dispositif de séparation en fonction de la mesure de turbidité du premier flux et/ou d'un écart entre la mesure de turbidité du premier flux et la mesure de turbidité de l'effluent.

En outre, le procédé de traitement peut comprendre une étape de calcul par un calculateur d'une performance de traitement en fonction de la mesure de turbidité du premier flux et la mesure de turbidité de l'effluent, auquel cas l'étape d'asservissement de la pompe d'activation consiste à activer ou augmenter la fréquence du variateur de fréquence de la pompe d'activation quand la performance de traitement atteint une première valeur de seuil prédéfinie et à désactiver ou diminuer la fréquence du variateur de fréquence de la pompe d'activation quand la performance de traitement atteint une seconde valeur de seuil.

### BREVE DESCRIPTION DES FIGURES

L'invention sera mieux comprise et d'autres avantages apparaîtront à la lecture de la description détaillée d'un mode de réalisation donné à titre d'exemple, description illustrée par le dessin joint dans lequel :
- la figure 1 représente schématiquement un dispositif de traitement d'un effluent selon l'invention,
- la figure 2 représente schématiquement un premier mode de réalisation d'un dispositif de traitement d'un effluent selon l'invention,
- la figure 3 représente schématiquement un deuxième mode de réalisation d'un dispositif de traitement d'un effluent selon l'invention,
- la figure 4 représente schématiquement un troisième mode de réalisation d'un dispositif de traitement d'un effluent selon l'invention,
- la figure 5 représente schématiquement un quatrième mode de réalisation d'un dispositif de traitement d'un effluent selon l'invention,
- la figure 6 représente schématiquement les étapes du procédé de traitement d'un effluent selon l'invention,
- la figure 7 illustre les résultats d'une modélisation de la recirculation de tout ou partie des boues produites sur le rendement global d'élimination des matières en suspension dans l'effluent.

Par souci de clarté, les mêmes éléments porteront les mêmes repères dans les différentes figures.

### DESCRIPTION DETAILLEE D'UN MODE DE REALISATION

Dans la description, l'invention est décrite avec l'exemple d'un effluent tel que des eaux résiduaires. Cependant, l'invention est applicable à tout autre liquide contenant des particules.

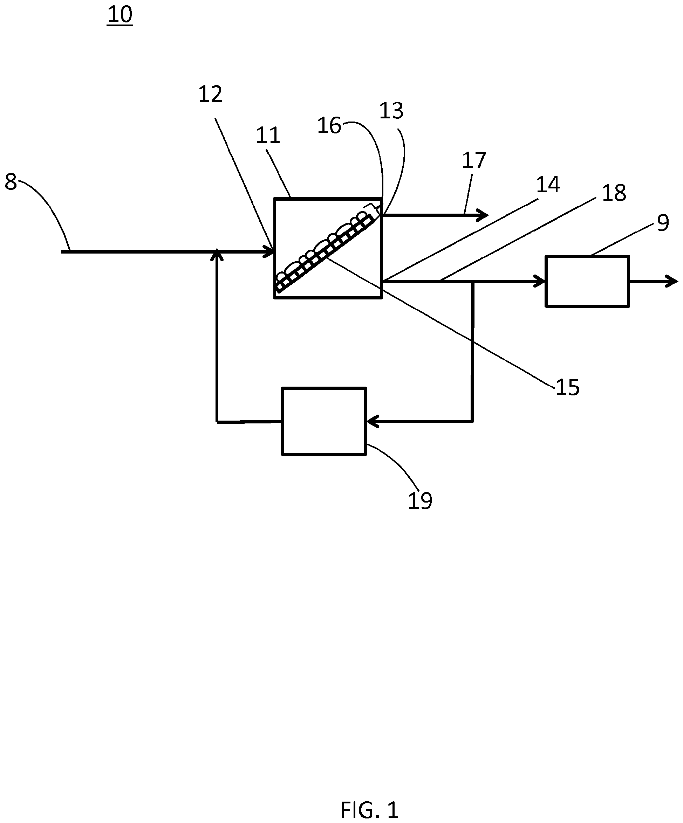

La figure 1 représente schématiquement un dispositif de traitement 10 d'un effluent 8 en un effluent traité. manière générale, on considère que l'effluent 8 est composé de liquide et de particules solides, les particules solides étant à comprendre comme des particules solides pouvant être rigides et/ou plus ou moins molles. Selon l'invention, le dispositif de traitement 10 comprend un dispositif de filtration primaire 11 par séparation gravitaire sur toile rotative ayant une entrée 12 destinée à recevoir l'effluent 8 à traiter et une première 13 et une seconde 14 sorties, le dispositif de filtration 10 étant destiné à séparer l'effluent 8 en un premier 17 et un second 18 flux, le premier flux 17 comprenant l'effluent traité, le second flux 18 comprenant des boues comprenant des particules solides, le premier flux 17 quittant le dispositif de filtration 11 par la première sortie 13 et le second flux 18 quittant le dispositif de filtration 11 par la seconde sortie 14. Le dispositif de traitement 10 comprend au moins un dispositif de recirculation 19 destiné à faire recirculer au moins une partie des boues du second flux 18 vers l'entrée 12 du dispositif de filtration 11, ladite deuxième sortie étant reliée au au moins un dispositif de recirculation 19. La recirculation d'une partie des boues du second flux 18 permet d'augmenter la quantité de particules dans l'effluent 8 pouvant être retenues sur la toile rotative.

Le dispositif de filtration 10 peut comprendre un premier filtre 15 ayant une maille d'un premier diamètre destiné à retenir sur le premier filtre 15 les particules ayant un diamètre supérieur au premier diamètre.

Le premier filtre 15 peut être configuré de façon à former, en combinaison avec les particules retenues sur le premier filtre 15, un second filtre 16 ayant une maille ayant une porosité correspondant à un seuil de coupure inférieur au premier diamètre.

Le premier diamètre de la maille du premier filtre 15, c'est-à-dire la taille de maille de la toile rotative, est généralement de 350 µm. Selon la granulométrie de l'effluent à traiter, il est possible de préférer un premier diamètre plus petit, par exemple 100 ou 200 µm si on sait que l'effluent contient essentiellement des particules de petites tailles, ou bien un premier diamètre plus grand, par exemple 400 ou 450 µm ou au delà si on sait au préalable que les particules de l'effluent sont de tailles très importantes.

Comme précédemment expliqué, dans les eaux résiduaires à traiter, on sait qu'une partie des particules sont de diamètre supérieur au premier diamètre choisi. Ainsi, ces particules ayant un diamètre supérieur au premier diamètre vont s'accumuler sur le premier filtre 15. Ces particules, en combinaison avec le premier filtre forment alors un second filtre 16. Il en résulte que le second filtre 16 a une porosité (que l'on peut voir comme une taille de maille) correspondant à un seuil de coupure inférieur au premier diamètre puisque d'autres particules se superposent sur les mailles du premier filtre 15. La porosité à l'effluent devient donc plus faible avec le second filtre 16 qu'avec seulement le premier filtre 15. C'est ce qu'on appelle la filtration sur gâteau. Néanmoins, il arrive que l'effluent contienne peu de particules de diamètre supérieur au premier diamètre. Le second filtre 16 peut alors difficilement se former, pénalisant la filtration de l'effluent. Afin de contrer ce problème, l'invention assure la formation du second filtre quelque soit la granulométrie de l'effluent. Le principe de l'invention repose sur la recirculation d'au moins une partie des boues, normalement dirigées vers une unité de traitement 9 des boues, vers l'entrée 12 du dispositif de filtration 11. En d'autres termes, afin d'assurer une bonne filtration de l'effluent 8, c'est-à-dire une séparation efficace des particules de l'effluent 8, le dispositif de traitement selon l'invention vise à insérer des particules dans l'effluent 8, c'est-à-dire cherche à augmenter la quantité de particules dans l'effluent 8 à traiter.

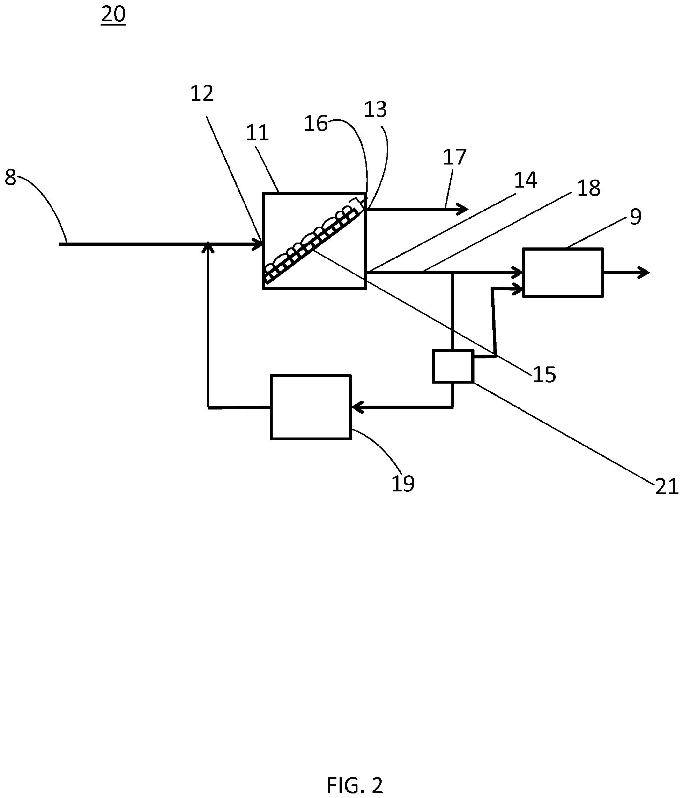

La **figure 2** représente schématiquement un mode de réalisation d'un dispositif de traitement 20 d'un effluent selon l'invention. Le dispositif de traitement 20 représenté sur la figure 2 comprend les mêmes éléments que le dispositif de traitement 10 représenté sur la figure 1. Dans ce mode de réalisation, le dispositif de traitement 20 comprend en outre un dispositif de séparation 21 configuré pour séparer les particules des boues du second flux 18 en fonction de leur taille ou densité, de façon à faire recirculer vers l'entrée 12 du dispositif de filtration 11 les particules de taille ou densité supérieure à une taille ou densité prédéfinie. Les particules de taille ou densité inférieure à la taille ou densité prédéfinie peuvent être dirigées vers l'unité de traitement 9 de boues. La taille ou densité prédéfinie peut être choisie selon le type d'effluent à traiter et/ou selon le rendement épuratoire obtenu et/ou selon la qualité de l'eau traitée. Ainsi, s'il est constaté que le premier flux 17 contient encore trop de particules, et donc que le dispositif de filtration 11 ne filtre pas assez l'effluent 8, la taille ou densité prédéfinie peut être diminuée faisant ainsi recirculer des particules vers l'entrée 12 des particules qui auraient été jusqu'alors dirigées vers l'unité de traitement 9 afin de garantir la bonne formation du filtre 16. Egalement le débit de recirculation peut être adapté pour faire recirculer davantage de particules afin d'assurer la formation du second filtre 16 qui permette de traiter l'effluent de manière adéquate, c'est-à-dire pour que le premier flux 17 ne comprennent pas trop de particules.

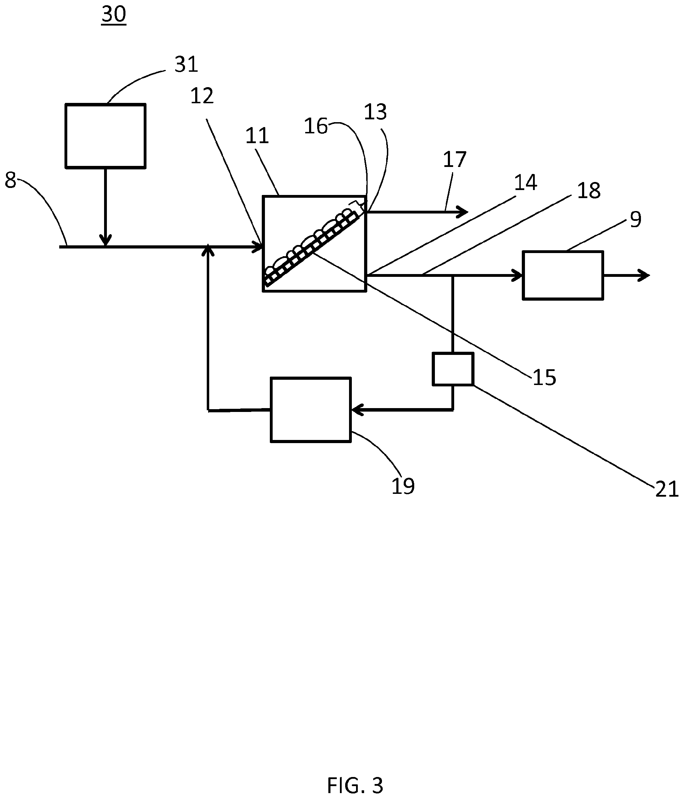

La **figure 3** représente schématiquement un autre mode de réalisation d'un dispositif de traitement 30 d'un effluent selon l'invention. Le dispositif de traitement 30 représenté sur la figure 3 comprend les mêmes éléments que le dispositif de traitement 20 représenté sur la figure 2. Selon l'invention, le dispositif de traitement 30 peut comprendre en outre un dispositif d'ensemencement 31 de l'effluent 8 positionné en amont de l'entrée 12 du dispositif de filtration 11 et destiné à ensemencer des particules de diamètre et densité supérieurs à un deuxième diamètre et une densité préalablement définis de façon à augmenter la quantité de particules dans l'effluent 8 pouvant contribuer à la formation du second filtre 16. Ce mode de réalisation est particulièrement intéressant dans le cas où l'effluent est dépourvu de ou pauvre en particules de diamètre supérieur au premier diamètre, par exemple 350 µm. Le dispositif d'ensemencement 31 ajoute ainsi à l'effluent 8 des particules à fort diamètre, supérieur au premier diamètre. Il s'agit d'un dopage artificiel de l'effluent 8 par ajout de particules avec une granulométrie adéquate. Ces particules ensemencées dans l'effluent 8 s'accumulent alors sur le premier filtre 15 et contribuent à la formation du second filtre 16. Autrement dit, ces particules ensemencées sont destinées à former des couches du gâteau de filtration.

Dans ce mode de réalisation, il est préférable d'activer le dispositif de séparation 21 en continu pour s'assurer que les particules ensemencées soient confinées dans le dispositif de traitement et d'éviter leur perte vers l'unité de traitement 9 des boues. En d'autres termes, dans le cas d'un ensemencement, il est préférable que le second flux 18 soit dirigé vers le dispositif de séparation 21 pour maintenir les particules dans le dispositif de traitement. Et sans ensemencement, le second flux 18 peut être dirigé vers l'unité 9 de traitement des boues et/ou le dispositif de séparation 21. La proportion du second flux 18, et donc la proportion de boues, dirigée vers le dispositif de séparation 21 est un levier adaptable selon le niveau de traitement souhaité.

Les particules servant à l'ensemencement peuvent être récupérées dans le second flux 18, recirculées vers le dispositif de séparation 21 et réinjectées vers l'effluent 8 à traiter.

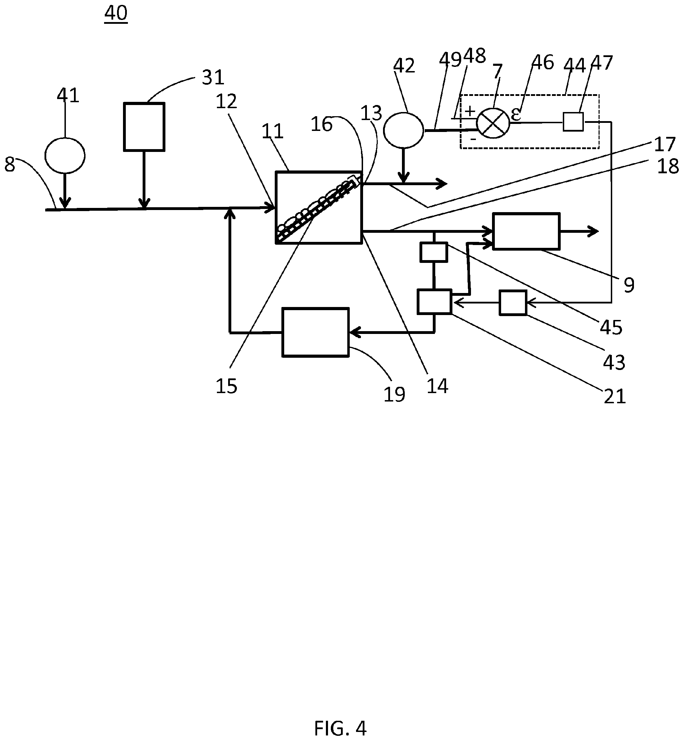

La **figure 4** représente schématiquement un troisième mode de réalisation d'un dispositif de traitement 40 d'un effluent selon l'invention. Le dispositif de traitement 40 représenté sur la figure 4 comprend les mêmes éléments que le dispositif de traitement 30 représenté sur la figure 3. On peut noter au passage que le dispositif de traitement 40 pourrait ne pas comprendre le dispositif d'ensemencement 31. Dans ce quatrième mode de réalisation, le dispositif de traitement 40 d'un effluent 8 comprend avantageusement une sonde de turbidité 41 positionnée en amont de l'entrée 12 du dispositif de filtration 11 apte à fournir une mesure de turbidité de l'effluent 8, une sonde de turbidité 42 positionnée en aval de la première sortie 13 du dispositif de filtration 11 apte à fournir une mesure de turbidité 49 du premier flux 17, une pompe d'activation 43 du dispositif de séparation 21, un moyen d'asservissement 44 de la pompe d'activation 43 du dispositif de recirculation 19 en fonction de la mesure de turbidité 49 du premier flux 17 et/ou de la mesure de turbidité 49 de l'effluent 8 et/ou d'un écart entre la mesure de turbidité 49 du premier flux 17 et la mesure de turbidité de l'effluent 8.

Les sondes de turbidité d'entrée 41 et de sortie 42 permettent en temps réel de connaître la qualité de l'effluent 8 à traiter ainsi que le rendement d'élimination effectif du dispositif de traitement selon l'invention. Un opérateur en charge du dispositif de traitement peut décider de fixer un point de fonctionnement du dispositif de traitement. Ce point de fonctionnement peut être sous forme d'une consigne 48 de turbidité en sortie, ou une consigne de turbidité en entrée, ou un rendement à atteindre en mesurant l'écart de mesure fourni par les deux sondes 41, 42. Si la valeur effective de turbidité 49 est supérieure ou inférieure, selon, à la consigne fixée 48 par l'opérateur, ou si le rendement en turbidité est inférieur à la consigne, un écart 46 est déterminé et la pompe d'activation 43 est mise en fonctionnement et reste en fonctionnement tant que la consigne 48 fixée n'est pas atteinte, c'est-à-dire tant que l'écart 46 est non nul, ou tant qu'il est supérieur à une valeur de seuil.

Il s'agit ici d'un exemple de régulation du dispositif de traitement. D'autres algorithmes de régulation peuvent être envisagés selon différentes mesures en entrée et sortie du dispositif de traitement pour permettre un asservissement efficace du dispositif de traitement. Autrement dit, l'invention concerne tout dispositif de traitement avec un moyen d'asservissement 44 de la pompe d'activation 43 du dispositif de séparation 21 en fonction des mesures d'entrée et/ou de sortie.

La boue est envoyée vers le dispositif de séparation 21. Comme déjà mentionné, le dispositif de séparation 21 dirige les particules de taille supérieure à la taille prédéfinie vers l'entrée 12 du dispositif de filtration 11 et vers l'unité de traitement 9 de boues les particules de taille inférieure à la taille prédéfinie.

Si la consigne 48 fixée par l'opérateur est atteinte, la granulométrie de l'effluent 8 permet d'atteindre les performances souhaitées, il n'est alors plus nécessaire de doper l'effluent en particules de grande taille, la pompe d'activation 43 du dispositif de séparation 21 est arrêtée.

De plus, le dispositif de traitement 40 peut comprendre un calculateur 47 destiné à calculer une performance de traitement en fonction de la mesure de turbidité 49 du premier flux 17 et la mesure de turbidité de l'effluent 8, et le moyen d'asservissement 44 peut être configuré pour activer la pompe d'activation 43 quand la performance de traitement atteint une première valeur de seuil prédéfinie et pour désactiver la pompe d'activation 43 quand la performance de traitement atteint une seconde valeur de seuil prédéfinie. Par exemple, la performance de traitement peut correspondre au rapport entre la mesure de turbidité 49 du premier flux 17 et la mesure de turbidité de l'effluent 8 ou bien une différence entre ces deux mesures. Il est également possible, pour une performance de traitement comprise entre la première et la seconde valeur de seuil, d'adapter le débit en fonction du résultat souhaité. Autrement dit, le débit peut être adapté au fur et à mesure du fonctionnement du dispositif de traitement en fonction des mesures réalisées.

Le calculateur 47 peut être intégré dans le moyen d'asservissement 44 comme représenté sur la figure 4, mais il peut également être extérieur au moyen d'asservissement 44.

Par ailleurs, la pompe d'activation 43 peut être équipée d'un variateur de vitesse par exemple pour adapter la fréquence d'un moteur électrique pour passer d'un mode de fonctionnement par activation et désactivation à un mode de fonctionnement continu avec modulation du débit en fonction des écarts 46 aux consignes 48 de turbidité fixées. Ce mode de fonctionnement continu permet d'éviter des démarrages et arrêts intempestifs de moteurs qui risquent d'endommager des pièces et/ou d'en limiter la durée de vie.

Avantageusement, le dispositif de traitement 40 selon l'invention peut comprendre un dispositif de dilution 45 du second flux 18 positionné en aval de la seconde sortie 14 du dispositif de filtration 11. Le dispositif de dilution 45, destiné à faciliter la ségrégation des particules de densité ou de taille importante, peut utiliser l'eau traitée du premier flux 17 ou bien de l'eau du circuit d'eau industriel dans lequel le dispositif de traitement est implanté, ou bien encore de l'eau potable. Le dispositif de dilution 45 du second flux 18 permet une pré-dilution des eaux avant le passage dans le dispositif de séparation 21, notamment si les boues sont trop épaisses en sortie 14 du dispositif de filtration 11.

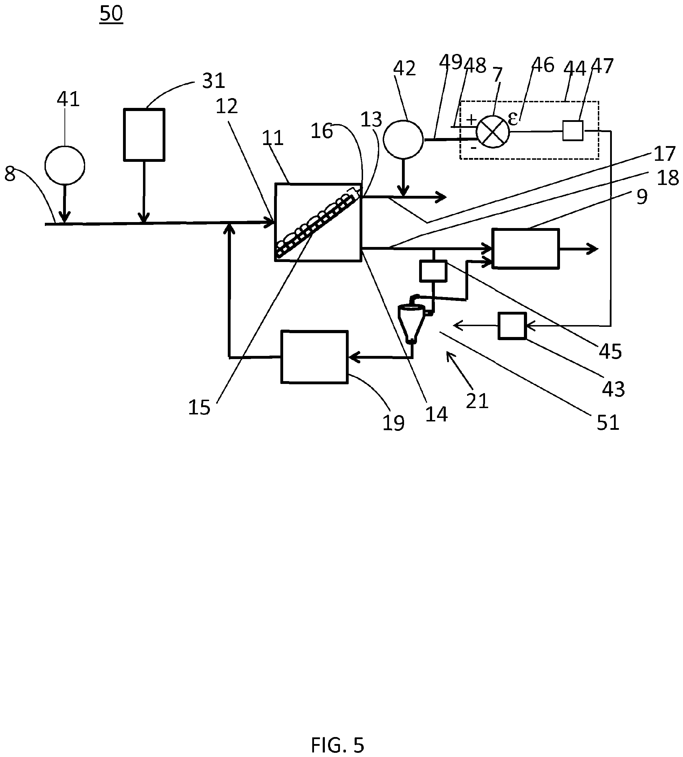

La **figure 5** représente schématiquement un quatrième mode de réalisation d'un dispositif de traitement 50 d'un effluent selon l'invention. Le dispositif de traitement 50 représenté sur la figure 5 comprend les mêmes éléments que le dispositif de traitement 40 représenté sur la figure 4. On peut noter ici également que le dispositif de traitement 50 pourrait ne pas comprendre le dispositif d'ensemencement 31. Selon l'invention, le dispositif de séparation 21 peut comprendre un hydrocyclone 51. L'hydrocyclone 51 est un dispositif qui utilise la force centrifuge pour séparer les particules lourdes d'un liquide. Sur la figure 5, le second flux 18 entre par la droite de l'hydrocyclone 51, les particules lourdes sortent par le bas de l'hydrocyclone et sont dirigées vers l'entrée 12 du dispositif de filtration 11 et la partie contenant les particules légères sort par le haut de l'hydrocyclone 51 et est dirigée vers l'unité de traitement 9 des boues. Les rendements de séparation des hydrocyclones entre particules légères et lourdes sont directement dépendants de la manière dont l'appareil est dimensionné. La littérature indique des rendements supérieurs à 97% pour des appareils correctement conçus et exploités.

Alternativement à l'hydrocyclone 51, le dispositif de séparation 21 peut comprendre un tamis permettant un criblage des boues, correspondant à une séparation des particules fines et des particules de taille plus importante. Il est également possible d'utiliser, alternativement à l'hydrocyclone 51, un dispositif de décantation permettant d'obtenir la séparation des particules fines et des particules de taille plus importante par décantation.

Pour des raisons de facilité de compréhension, l'invention est décrite avec un dispositif de recirculation 19. L'invention concerne aussi tout dispositif de traitement comprenant deux, trois, ou une pluralité de dispositifs de recirculation. Dans ce cas, la deuxième sortie 14 du dispositif de filtration primaire 11 est reliée aux deux, trois, ou à la pluralité de dispositifs de recirculation.

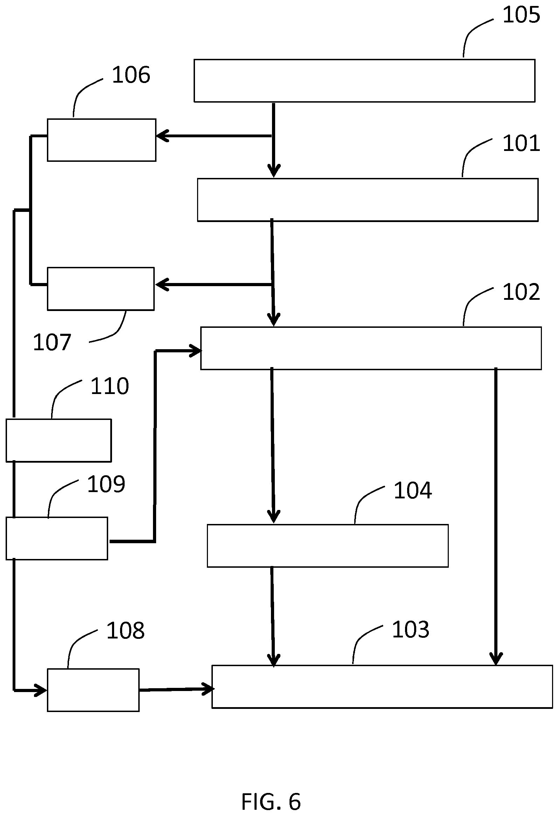

La **figure 6** représente schématiquement les étapes du procédé de traitement d'un effluent selon l'invention. Le procédé de traitement d'un effluent 8 à traiter composé de liquide et de particules solides mettant en œuvre un dispositif de filtration primaire 11 par séparation gravitaire sur toile rotative ayant une entrée 12 destinée à recevoir l'effluent 8 à traiter et une première 13 et une seconde 14 sorties, comprend une étape 101 de séparation de l'effluent 8 en premier 17 et second 18 flux, le premier flux 17 comprenant l'effluent traité, le second flux 18 comprenant des boues comprenant des particules solides, le premier flux 17 quittant le dispositif de filtration 11 par la première sortie 13 et le second flux 18 quittant le dispositif de filtration 11 par la seconde sortie 14. Le procédé comprend une étape de recirculation 102 d'au moins une partie des boues du second flux 18 vers l'entrée 12 du dispositif de filtration 11 par un dispositif de recirculation 21 de façon à augmenter la quantité de particules dans l'effluent pouvant être retenues sur la toile rotative.

Le procédé de traitement selon l'invention met en œuvre le dispositif de filtration primaire 11 comprenant en outre un premier filtre 15 ayant une maille d'un premier diamètre destiné à retenir sur le premier filtre 15 les particules ayant un diamètre supérieur au premier diamètre et comprend une étape de formation d'un second filtre 16 à partir du premier filtre 15 et des particules retenues sur le premier filtre 15, le second filtre 16 ayant une porosité correspondant à un seuil de coupure inférieur au premier diamètre

Le procédé de traitement comprend en outre une étape de séparation 103 des particules du second flux 18 en fonction de leur taille ou de leur densité par un dispositif de séparation 21, de façon à faire recirculer vers l'entrée 12 du dispositif de filtration 11 les particules de taille ou de densité supérieure à une taille ou une densité prédéfinie. Il est possible de diriger vers l'unité de traitement 9 de boues les particules de taille ou de densité inférieure à la taille ou la densité prédéfinie.

En faisant recirculer une partie des particules, de préférence à fort diamètre, le procédé selon l'invention sécurise la formation du second filtre 16, c'est-à-dire la formation du gâteau permettant une meilleure filtration sur la toile rotative et garantit un bon rendement épuratoire.

Le procédé de traitement selon l'invention peut comprendre une étape de dilution 104 du second flux 18 en aval de la seconde sortie 14 du dispositif de filtration 11 pour faciliter la ségrégation. L'étape de dilution 104 est importante surtout si les boues sont trop épaisses en sortie 14 du dispositif de filtration 11.

Dans un autre mode de réalisation, le procédé de traitement selon l'invention comprend une étape d'ensemencement 105 de l'effluent 8 en amont du dispositif de filtration 11 de particules de diamètre supérieur à un deuxième diamètre préalablement défini de façon à augmenter la quantité de particules dans l'effluent pouvant contribuer à la formation du second filtre. Ce mode de réalisation est particulièrement intéressant dans le cas où l'effluent 8 est trop pauvre en particules de diamètre supérieur au premier diamètre. L'étape d'ensemencement 105 permet d'ajouter à l'effluent 8 des particules à fort diamètre, supérieur au premier diamètre.

Dans un mode de réalisation particulièrement avantageux, le procédé de traitement comprend une étape de mesure 106 de turbidité de l'effluent 8 par une sonde de turbidité 41 positionnée en amont de l'entrée 12 du dispositif de filtration primaire 11, une étape de mesure 107 de turbidité 49 du premier flux 17 par une sonde de turbidité 42 positionnée en aval de la première sortie 13 du dispositif de filtration primaire 11, une étape d'activation, de modulation en intensité ou de désactivation 108 du dispositif de séparation 21 par une pompe d'activation 43, une étape d'asservissement 109 de la pompe d'activation 43 du dispositif de séparation 21 en fonction de la mesure de turbidité 49 du premier flux 17 et/ou d'un écart entre la mesure de turbidité 49 du premier flux 17 et la mesure de turbidité de l'effluent 8.

Associée à l'étape de mesure 107 de turbidité 49 du premier flux 17, le procédé de traitement selon l'invention peut comprendre dans l'étape de recirculation 102 une étape de modulation du débit du flux recirculé quand le premier flux 17 comporte trop de particules par rapport au niveau de traitement souhaité.

Le procédé de traitement peut notamment comprendre une étape de calcul 110 par un calculateur 47 d'un quotient de traitement correspondant au rapport entre la mesure de turbidité 49 du premier flux 17 et la mesure de turbidité de l'effluent 8, et l'étape d'asservissement 109 de la pompe d'activation 43 consiste alors à activer la pompe d'activation 43 ou augmenter la fréquence du variateur de fréquence de la pompe d'activation 43 quand le quotient de traitement est supérieur à une valeur de seuil prédéfinie et à désactiver la pompe d'activation 43 ou diminuer la fréquence du variateur de fréquence de la pompe d'activation 43 quand le quotient de traitement est inférieur à une valeur de seuil. L'étape de calcul 110 et l'étape d'asservissement 109 sont un moyen d'action sur le contrôle du rendement.

Les performances épuratoires d'un tel procédé sont sécurisées puisque même un effluent pauvre en particules de tailles supérieur au premier diamètre peut être traité par recyclage de ses particules les plus importantes en taille. Le procédé selon l'invention offre la possibilité de piloter le rendement du traitement de l'effluent. En effet, si des rendements épuratoires importants sont demandés, l'opérateur peut choisir de recycler une part importante de particules de fort diamètre, permettant la formation d'un gâteau adéquat. De plus, l'opérateur peut piloter cette recirculation de particules. L'asservissement contrôle la recirculation. Enfin, l'invention propose une solution dépourvues d'intrants chimiques : aucune boue supplémentaire n'est produite, et aucun besoin en réactifs qui ont un impact négatif sur les coûts et l'environnement.

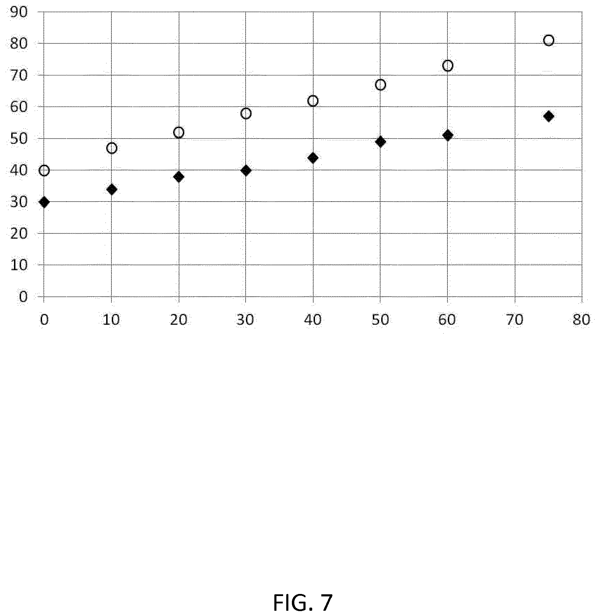

La **figure 7** illustre les résultats d'une modélisation de la recirculation de tout ou partie des boues produites, par un dispositif de traitement selon l'invention, sur le rendement global d'élimination des matières en suspension (aussi appelées MES pour leur acronyme) dans l'effluent. Le graphique de la figure 7 représente le rendement d'élimination des matières en suspensions (MES) en pourcentage (l'axe des ordonnées) en fonction de la charge de matières en suspension recirculées sur la charge totale entrante de matières en suspension (MES) en pourcentage (l'axe des abscisses) pour deux eaux résiduaires. Le modèle utilisé a été développé à partir de données expérimentales. Il a été appliqué à deux eaux résiduaires de qualités équivalentes mais de filtrabilités différentes.

### Hypothèses et conditions aux bornes

Eaux résiduaires municipales dégrillées, dessablées et dégraissées.
Matières en suspensions dans l'effluent : 300 mg/L
Charge unitaire en MES : 30 kg/h
Température : > 8 °C
pH : 6 - 8
Taux de capture des MES sans recirculation :
Eau résiduaire 1 : ΔMES = 40 % (symbole en cercle sur le graphique)
Eau résiduaire 2 : ΔMES = 30 % (symbole en losange sur le graphique)

La figure 7 présente l'effet de l'augmentation du pourcentage de matières en suspension (MES) de l'effluent brut recirculées depuis les boues primaires produites sur le rendement global d'élimination des matières en suspension (MES). Le taux de capture des matières en suspension (MES) est calculé à partir des concentrations en matières en suspension (MES) dans l'effleuent brut avant recirculation.

Lorsque 0 % des boues produites sont recirculées, les taux de capture des MES pour les eaux résiduaires 1 et 2 sont respectivement 30 et 40 %. Ceci montre que les particules ou MES contenues dans l'eau résiduaire 1 conduisent à la formation d'un gâteau ayant un potentiel de filtration plus important que celles de l'eau résiduaire 2.

Dans les deux cas, eau résiduaire 1 et eau résiduaire 2, la recirculation des boues primaires conduit à l'amélioration du taux de capture global des matières en suspension par l'unité de filtration. Une amélioration est observée quel que soit le taux de recirculation des boues primaires entre 0% et 100 %.

Pour un même pourcentage de charge en MES recirculées, l'augmentation du taux de capture est plus importante dans le cas de l'eau résiduaire 1, ce qui est cohérent avec le plus grand potentiel des MES de l'eau résiduaire 1 à former un gâteau filtrant à la surface de la toile.

A titre d'exemple, pour maintenir un taux de capture des MES supérieur à 50 %, il faudra dans le cas de l'eau résiduaire 1 recirculer l'équivalent d'au moins 20 % de la charge entrante alors que pour l'eau résiduaire 2 la recirculation de l'équivalent de 60 % de la charge entrante sera nécessaire.

Les résultats montrent qu'il est donc possible de contrôler le taux de capture des MES par le dispositif de traitement selon l'invention comprenant l'unité de filtration primaire avec recirculation de tout ou partie des boues produites.

Ainsi, le procédé selon l'invention présente l'avantage d'augmenter et de contrôler les performances de la filtration sans mettre en jeu des réactifs additionnels. Il est important de souligner que l'invenvtion repose sur le fait que la boue elle-même constitue le filtre. Il n'y a pas d'ajout de matière extérieure dans l'effluent. Autrement dit, le matériau filtrant est directement issu de l'effluent à traiter, et l'invention ne nécessite pas l'ajout d'un support additionnel.

## Revendications

1. Dispositif de traitement (10, 20, 30, 40, 50) d'un effluent (8) composé de liquide et de particules solides en un effluent traité, **caractérisé en ce qu'**il comprend :
• un dispositif de filtration primaire (11) par séparation gravitaire sur toile rotative ayant une entrée (12) destinée à recevoir l'effluent (8) à traiter et une première (13) et une seconde (14) sorties, le dispositif de filtration (11) étant destiné à séparer l'effluent (8) en un premier (17) et un second (18) flux, le premier flux (17) comprenant l'effluent traité, le second flux (18) comprenant des boues comprenant des particules solides de l'effluent (8) à traiter, le premier flux (17) quittant le dispositif de filtration (11) par la première sortie (13) et le second flux (18) quittant le dispositif de filtration (11) par la seconde sortie (14),
• au moins un dispositif de recirculation (19) destiné à faire recirculer au moins une partie des boues du second flux (18), destinées à être dirigées vers une unité de traitement (9), vers l'entrée (12) du dispositif de filtration (11), ladite deuxième sortie étant reliée au au moins un dispositif de recirculation (19), **en ce que** le dispositif de filtration (11) comprend un premier filtre (15) ayant une maille d'un premier diamètre destiné à retenir sur le premier filtre (15) les particules solides de l'effluent (8) à traiter ayant un diamètre supérieur au premier diamètre, et **en ce que** le premier filtre (15) est configuré de façon à former, en combinaison avec les particules solides de l'effluent (8) à traiter retenues sur le premier filtre (15), un second filtre (16) ayant une porosité correspondant à un seuil de coupure inférieur au premier diamètre,
et **en ce qu'**il comprend un dispositif de séparation (21) configuré pour séparer les particules des boues de l'effluent (8) à traiter du second flux (18) en fonction de leur taille ou leur densité, de façon à faire recirculer vers l'entrée (12) du dispositif de filtration (11) les particules de l'effluent (8) à traiter de taille supérieure à une taille ou une densité prédéfinie.

2. Dispositif de traitement (50) selon la revendication 1, **caractérisé en ce que** le dispositif de séparation (21) comprend un hydrocyclone (51).

3. Dispositif de traitement (40, 50) selon l'une quelconque des revendications 1 ou 2, **caractérisé en ce qu'**il comprend un dispositif de dilution (45) du second flux (8) positionné en aval de la seconde sortie (14) du dispositif de filtration (11).

4. Dispositif de traitement (30, 40, 50) selon l'une quelconque des revendications précédentes, **caractérisé en ce qu'**il comprend en outre un dispositif d'ensemencement (31) de l'effluent (8) positionné en amont de l'entrée (12) du dispositif de filtration (11) et destiné à ensemencer des particules de diamètre supérieur à un deuxième diamètre préalablement défini.

5. Dispositif de traitement (40, 50) selon l'une quelconque des revendications précédentes, **caractérisé en ce qu'**il comprend :
• une sonde de turbidité (41) positionnée en amont de l'entrée (12) du dispositif de filtration (11) apte à fournir une mesure de turbidité de l'effluent (8),
• une sonde de turbidité (42) positionnée en aval de la première sortie (13) du dispositif de filtration (11) apte à fournir une mesure de turbidité (49) du premier flux (17),
• une pompe d'activation (43) du dispositif de séparation (21),
• un moyen d'asservissement (44) de la pompe d'activation (43) du dispositif de séparation (21) en fonction de la mesure de turbidité (49) du premier flux (17) et/ou d'un écart entre la mesure de turbidité (49) du premier flux (17) et la mesure de turbidité de l'effluent (8).

6. Dispositif de traitement (40, 50) selon la revendication précédente, **caractérisé en ce qu'**il comprend un calculateur (47) destiné à calculer une performance de traitement en fonction de la mesure de turbidité (49) du premier flux (17) et la mesure de turbidité de l'effluent (8), et **en ce que** le moyen d'asservissement (44) est configuré pour activer la pompe d'activation (43) quand la performance de traitement atteint une première valeur de seuil prédéfinie et pour désactiver la pompe d'activation (43) quand la performance de traitement atteint une seconde valeur de seuil prédéfinie.

7. Procédé de traitement d'un effluent (8) composé de liquide et de particules solides mettant en œuvre un dispositif de filtration primaire (11) par séparation gravitaire sur toile rotative ayant une entrée (12) destinée à recevoir l'effluent (8) à traiter et une première (13) et une seconde (14) sorties, le dispositif de filtration (11) comprenant un premier filtre (15) ayant une maille d'un premier diamètre destiné à retenir sur le premier filtre (15) les particules de l'effluent (8) à traiter ayant un diamètre supérieur au premier diamètre, **caractérisé en ce qu'**il comprend :
• une étape (101) de séparation de l'effluent (8) en premier (17) et second (18) flux, le premier flux (17) comprenant l'effluent traité, le second flux (18) comprenant des boues comprenant des particules solides de l'effluent (8) à traiter, le premier flux (17) quittant le dispositif de filtration (11) par la première sortie (13) et le second flux (18) quittant le dispositif de filtration (11) par la seconde sortie (14),
• une étape de recirculation (102) d'au moins une partie des boues du second flux (18), destinées à être dirigées vers une unité de traitement (9), vers l'entrée (12) du dispositif de filtration (11) par un dispositif de recirculation (21),
• une étape de formation d'un second filtre (16) à partir du premier filtre (15) et des particules de l'effluent (8) à traiter retenues sur le premier filtre (15), le second filtre (16) ayant une porosité correspondant à un seuil de coupure inférieur au premier diamètre, une étape de séparation (103) des particules du second flux (18) en fonction de leur taille ou de leur densité par un dispositif de séparation (21), de façon à faire recirculer vers l'entrée (12) du dispositif de filtration (11) les particules de l'effluent (8) à traiter de taille ou de densité supérieure à une taille ou une densité prédéfinie.

8. Procédé de traitement selon la revendication 7, **caractérisé en ce qu'**il comprend une étape de dilution (104) du second flux (18) en aval de la seconde sortie (14) du dispositif de filtration (11).

9. Procédé de traitement selon l'une quelconque des revendications 7 ou 8, **caractérisé en ce qu'**il comprend une étape d'ensemencement (105) de l'effluent (8) en amont du dispositif de filtration (11) de particules de diamètre supérieur à un second diamètre préalablement défini.

10. Procédé de traitement selon l'une quelconque des revendications 7 à 9, **caractérisé en ce qu'**il comprend :
• une étape de mesure (106) de turbidité de l'effluent (8) par une sonde de turbidité (41) positionnée en amont de l'entrée (12) du dispositif de filtration primaire (11),
• une étape de mesure (107) de turbidité (49) du premier flux (17) par une sonde de turbidité (42) positionnée en aval de la première sortie (13) du dispositif de filtration primaire (11),
• une étape d'activation, de modulation en intensité ou de désactivation (108) du dispositif de séparation (21) par une pompe d'activation (43),
• une étape d'asservissement (109) de la pompe d'activation (43) du dispositif de séparation (21) en fonction de la mesure de turbidité (49) du premier flux (17) et/ou d'un écart entre la mesure de turbidité (49) du premier flux (17) et la mesure de turbidité de l'effluent (8).

11. Procédé de traitement selon la revendication 10, **caractérisé en ce qu'**il comprend une étape de calcul (110) par un calculateur (47) d'une performance de traitement en fonction de la mesure de turbidité (49) du premier flux (17) et la mesure de turbidité de l'effluent (8), et **en ce que** l'étape d'asservissement (109) de la pompe d'activation (43) consiste à activer ou augmenter la fréquence du variateur de fréquence de la pompe d'activation (43) quand la performance de traitement atteint une première valeur de seuil prédéfinie et à désactiver ou diminuer la fréquence du variateur de fréquence de la pompe d'activation (43) quand la performance de traitement atteint une seconde valeur de seuil.

## Patentansprüche

1. Vorrichtung zur Behandlung (10, 20, 30, 40, 50) eines aus Flüssigkeit und Feststoffpartikeln zusammengesetzten Abwassers (8) zu einem behandelten Abwasser, **dadurch gekennzeichnet, dass** sie Folgendes umfasst:
• eine Vorrichtung (11) zum primären Filtern durch Schwerkrafttrennung auf einem rotierenden Sieb mit einem Einlass (12) zum Aufnehmen des zu behandelnden Abwassers (8) sowie einem ersten (13) und einem zweiten (14) Auslass, wobei die Filtrationsvorrichtung (11) zum Trennen des Abwassers (8) in einen ersten (17) und einen zweiten (18) Strom bestimmt ist, wobei der erste Strom (17) das behandelte Abwasser umfasst, der zweite Strom (18) Schlamm umfasst, der Feststoffpartikel des zu behandelnden Abwassers (8) umfasst, wobei der erste Strom (17) die Filtrationsvorrichtung (11) durch den ersten Auslass (13) verlässt und der zweite Strom (18) die Filtrationsvorrichtung (11) durch den zweiten Auslass (14) verlässt,
• mindestens eine Rezirkulationsvorrichtung (19) zum Rezirkulieren mindestens eines Teils des Schlamms des zweiten Stroms (18), der zum Leiten zu einer Behandlungseinheit (9) zum Einlass (12) der Filtervorrichtung (11) bestimmt ist, wobei der zweite Auslass mit mindestens einer Rezirkulationsvorrichtung (19) verbunden ist, dadurch, dass die Filtrationsvorrichtung (11) einen ersten Filter (15) mit Maschen mit einem ersten Durchmesser umfasst, um auf dem ersten Filter (15) die Feststoffpartikel des zu behandelnden Abwassers (8) zurückzuhalten, die einen Durchmesser haben, der größer als der erste Durchmesser ist, und dadurch, dass der erste Filter (15) so konfiguriert ist, dass er in Kombination mit den auf dem ersten Filter (15) zurückgehaltenen Feststoffpartikeln des zu behandelnden Abwassers (8) einen zweiten Filter (16) mit einer Porosität bildet, die einer Ausschlussgrenze entspricht, die kleiner als der erste Durchmesser ist,
und dadurch, dass sie eine Trennvorrichtung (21) umfasst, die zum Trennen der Partikel des Schlamms des zu behandelnden Abwassers (8) vom zweiten Strom (18) in Abhängigkeit von ihrer Größe oder Dichte konfiguriert ist, um so die Partikel des zu behandelnden Abwassers (8) mit einer Größe, die größer als eine vordefinierte Größe oder Dichte ist, zum Einlass (12) der Filtrationsvorrichtung (11) rezirkulieren.

2. Behandlungsvorrichtung (50) nach Anspruch 1, **dadurch gekennzeichnet, dass** die Trennvorrichtung (21) einen Hydrozyklon (51) umfasst.

3. Behandlungsvorrichtung (40, 50) nach Anspruch 1 oder 2, **dadurch gekennzeichnet, dass** sie eine Vorrichtung (45) zum Verdünnen des zweiten Stroms (8) umfasst, die stromabwärts des zweiten Auslasses (14) der Filtrationsvorrichtung (11) angeordnet ist.

4. Behandlungsvorrichtung (30, 40, 50) nach einem der vorherigen Ansprüche, **dadurch gekennzeichnet, dass** sie außerdem eine Vorrichtung (31) zum Ausspritzen des Abwassers (8) umfasst, die stromaufwärts des Einlasses (12) der Filtrationsvorrichtung (11) positioniert und zum Ausspritzen von Partikeln mit einem Durchmesser bestimmt ist, der größer ist als ein zweiter, vorher definierter Durchmesser.

5. Behandlungsvorrichtung (40, 50) nach einem der vorherigen Ansprüche, **dadurch gekennzeichnet, dass** sie Folgendes umfasst:
• eine Trübungssonde (41), die stromaufwärts des Einlasses (12) der Filtrationsvorrichtung (11) positioniert ist und einen Trübungsmesswert des Abwassers (8) liefern kann,
• eine Trübungssonde (42), die stromabwärts des ersten Auslasses (13) der Filtrationsvorrichtung (11) positioniert ist und einen Trübungsmesswert (49) des ersten Stroms (17) bereitstellen kann,
• eine Aktivierungspumpe (43) der Trennvorrichtung (21),
• ein Mittel (44) zum Steuern der Aktivierungspumpe (43) der Trennvorrichtung (21) in Abhängigkeit vom Trübungsmesswert (49) des ersten Stroms (17) und/oder von einer Differenz zwischen dem Trübungsmesswert (49) des ersten Stroms (17) und dem Trübungsmesswert des Abwassers (8).

6. Behandlungsvorrichtung (40, 50) nach dem vorherigen Anspruch, **dadurch gekennzeichnet, dass** sie einen Rechner (47) zum Berechnen einer Behandlungsleistung in Abhängigkeit vom Trübungsmesswert (49) des ersten Flusses (17) und vom Trübungsmesswert des Abwassers (8) umfasst, und dadurch, dass das Steuermittel (44) konfiguriert ist zum Aktivieren der Aktivierungspumpe (43), wenn die Behandlungsleistung einen ersten vordefinierten Schwellenwert erreicht, und zum Deaktivieren der Aktivierungspumpe (43), wenn die Behandlungsleistung einen zweiten vordefinierten Schwellenwert erreicht.

7. Verfahren zur Behandlung von Abwasser (8), das aus flüssigen und festen Partikeln zusammengesetzt ist, unter Verwendung einer Vorrichtung (11) zum primären Filtern durch Schwerkrafttrennung auf einem rotierenden Sieb mit einem Einlass (12) zum Aufnehmen des zu behandelnden Abwassers (8) sowie einem ersten (13) und zweiten (14) Auslass, wobei die Filtrationsvorrichtung (11) einen ersten Filter (15) mit einer Masche mit einem ersten Durchmesser umfasst, der zum Zurückhalten der Partikel des zu behandelnden Abwassers (8) auf dem ersten Filter (15) bestimmt ist, die einen Durchmesser haben, der größer als der erste Durchmesser ist, **dadurch gekennzeichnet, dass** es Folgendes beinhaltet:
• einen Schritt (101) des Trennens des Abwassers (8) in einen ersten (17) und einen zweiten (18) Strom, wobei der erste Strom (17) das behandelte Abwasser umfasst, wobei der zweite Strom (18) Schlamm umfasst, der feste Partikel des zu behandelnden Abwassers (8) umfasst, wobei der erste Strom (17) die Filtrationsvorrichtung (11) durch den ersten Auslass (13) verlässt und der zweite Strom (18) die Filtrationsvorrichtung (11) durch den zweiten Auslass (14) verlässt,
• einen Schritt (102) des Rezirkulierens mindestens eines Teils des Schlamms des zweiten Stroms (18), der zu einer Behandlungseinheit (9), zum Einlass (12) der Filtrationsvorrichtung (11) durch eine Rezirkulationsvorrichtung (21) geleitet werden soll,
• einen Schritt des Bildens eines zweiten Filters (16) auf der Basis des ersten Filters (15) und der auf dem ersten Filter (15) zurückgehaltenen Partikel des zu behandelnden Abwassers (8), wobei der zweite Filter (16) eine Porosität aufweist, die einer Ausschlussgrenze entspricht, die kleiner als der erste Durchmesser ist, einen Schritt (103) des Trennens der Partikel des zweiten Stroms (18) in Abhängigkeit von ihrer Größe oder ihrer Dichte mittels einer Trennvorrichtung (21), um die Partikel des zu behandelnden Abwassers (8) mit einer Größe oder Dichte, die größer als eine vordefinierte Größe oder Dichte ist, zum Einlass (12) der Filtrationsvorrichtung (11) zu rezirkulieren.

8. Behandlungsverfahren nach Anspruch 7, **dadurch gekennzeichnet, dass** es einen Schritt (104) des Verdünnens des zweiten Stroms (18) stromabwärts des zweiten Auslasses (14) der Filtrationsvorrichtung (11) beinhaltet.

9. Behandlungsverfahren nach Anspruch 7 oder 8, **dadurch gekennzeichnet, dass** es einen Schritt (105) des Ausspritzens (105) des Abwassers (8) stromaufwärts der Filtrationsvorrichtung (11) für Partikel mit einem Durchmesser umfasst, die größer als ein zweiter, vorher definierter Durchmesser sind.

10. Behandlungsverfahren nach einem der Ansprüche 7 bis 9, **dadurch gekennzeichnet, dass** es Folgendes beinhaltet:
• einen Schritt (106) des Messens der Trübung des Abwassers (8) mittels einer Trübungssonde (41), die stromaufwärts des Einlasses (12) der primären Filtrationsvorrichtung (11) angeordnet ist,
• einen Schritt (107) des Messens der Trübung (49) des ersten Stroms (17) durch eine Trübungssonde (42), die stromabwärts des ersten Auslasses (13) der primären Filtrationsvorrichtung (11) angeordnet ist,
• einen Schritt des Aktivierens, Intensitätsmodulierens oder Deaktivierens (108) der Trennvorrichtung (21) durch eine Aktivierungspumpe (43),
• einen Schritt (109) des Steuerns der Aktivierungspumpe (43) der Trennvorrichtung (21) in Abhängigkeit vom Trübungsmesswert (49) des ersten Stroms (17) und/oder von einer Differenz zwischen dem Trübungsmesswert (49) des ersten Stroms (17) und dem Trübungsmesswert des Abwassers (8).

11. Behandlungsverfahren nach Anspruch 10, **dadurch gekennzeichnet, dass** es einen Schritt (110) des Berechnens einer Behandlungsleistung in Abhängigkeit vom Trübungsmesswert (49) des ersten Stroms (17) und vom Trübungsmesswert des Abwassers (8) durch einen Rechner (47) umfasst, und dadurch, dass der Schritt (109) des Steuerns der Aktivierungspumpe (43) das Aktivieren oder Erhöhen der Frequenz des Frequenzumrichters der Aktivierungspumpe (43), wenn die Behandlungsleistung einen ersten vordefinierten Schwellenwert erreicht, und das Deaktivieren oder Verringern der Frequenz des Frequenzumrichters der Aktivierungspumpe (43) beinhaltet, wenn die Behandlungsleistung einen zweiten Schwellenwert erreicht.

## Claims

1. A treatment device (10, 20, 30, 40, 50) for turning an effluent (8) composed of liquid and of solid particles into a treated effluent, **characterised in that** it comprises:
• a primary filtration device (11) filtering by gravity separation onto a rotating canvas, said device having an inlet (12) intended to receive the effluent (8) to be treated and a first (13) and a second (14) outlet, the filtration device (11) being intended to separate the effluent (8) into a first (17) and a second (18) flow, the first flow (17) comprising the treated effluent, the second flow (18) comprising sludge comprising solid particles of the effluent (8) to be treated, the first flow (17) exiting the filtration device (11) via the first outlet (13) and the second flow (18) exiting the filtration device (11) via the second outlet (14);
• at least one recirculation device (19) intended to recirculate at least part of the sludge of the second flow (18), which part is intended to be directed towards a treatment unit (9), towards the inlet (12) of the filtration device (11), said second outlet being connected to at least one recirculation device (19), **in that** the filtration device (11) comprises a first filter (15) having a mesh with a first diameter intended to retain, on the first filter (15), the solid particles of the effluent (8) to be treated with a diameter that is greater than the first diameter, and **in that** the first filter (15) is configured so as to form, in combination with the solid particles of the effluent (8) to be treated that are retained on the first filter (15), a second filter (16) having a porosity corresponding to a cut-off threshold that is less than the first diameter,
and **in that** it comprises a separation device (21) configured to separate the particles of the sludge of the effluent (8) to be treated from the second flow (18) as a function of their size or their density, so as to recirculate the particles of the effluent (8) to be treated that are bigger than a predefined size or a density towards the inlet (12) of the filtration device (11).

2. The treatment device (50) as claimed in claim 1, **characterised in that** the separation device (21) comprises a hydrocyclone (51).

3. The treatment device (40, 50) as claimed in any one of claims 1 or 2, **characterised in that** it comprises a dilution device (45) for the second flow (8) positioned downstream of the second outlet (14) of the filtration device (11).

4. The treatment device (30, 40, 50) as claimed in any one of the preceding claims, **characterised in that** it further comprises a device (31) for seeding the effluent (8) positioned upstream of the inlet (12) of the filtration device (11) and intended to seed particles with a diameter that is greater than a second previously defined diameter.

5. The treatment device (40, 50) as claimed in any one of the preceding claims, **characterised in that** it comprises:
• a turbidity probe (41) positioned upstream of the inlet (12) of the filtration device (11) that is able to provide a turbidity measurement of the effluent (8);
• a turbidity probe (42) positioned downstream of the first outlet (13) of the filtration device (11) that is able to provide a turbidity measurement (49) of the first flow (17);
• a pump (43) for activating the separation device (21);
• a means (44) for controlling the pump (43) for activating the separation device (21) as a function of the turbidity measurement (49) of the first flow (17) and/or of a difference between the turbidity measurement (49) of the first flow (17) and the turbidity measurement of the effluent (8).

6. The treatment device (40, 50) as claimed in the preceding claim, **characterised in that** it comprises a computer (47) intended to compute treatment performance as a function of the turbidity measurement (49) of the first flow (17) and the turbidity measurement of the effluent (8), and **in that** the control means (44) is configured to activate the activation pump (43) when the treatment performance reaches a first predefined threshold value and to deactivate the activation pump (43) when the treatment performance reaches a second predefined threshold value.

7. A method for treating an effluent (8) composed of liquid and of solid particles implementing a primary filtration device (11) filtering by gravity separation on a rotating canvas, said device having an inlet (12) intended to receive the effluent (8) to be treated and a first (13) and a second (14) outlet, the filtration device (11) comprising a first filter (15) having a mesh with a first diameter intended to retain, on the first filter (15), the particles of the effluent (8) to be treated with a diameter that is greater than the first diameter, **characterised in that** it comprises:
• a step (101) of separating the effluent (8) into first (17) and second (18) flows, the first flow (17) comprising the treated effluent, the second flow (18) comprising sludge comprising solid particles of the effluent (8) to be treated, the first flow (17) exiting the filtration device (11) via the first outlet (13) and the second flow (18) exiting the filtration device (11) via the second outlet (14);
• a step (102) of recirculating at least part of the sludge of the second flow (18), which part is intended to be directed towards a treatment unit (9), towards the inlet (12) of the filtration device (11) via a recirculation device (21);
• a step of forming a second filter (16) from the first filter (15) and the particles of the effluent (8) to be treated that are retained on the first filter (15), the second filter (16) having a porosity corresponding to a cut-off threshold that is less than the first diameter, a step (103) of separating the particles from the second flow (18) as a function of their size or of their density using a separation device (21), so as to recirculate the particles of the effluent (8) to be treated whose size or density are greater than a predefined size or density towards the inlet (12) of the filtration device (11).

8. The treatment method as claimed in claim 7, **characterised in that** it comprises a step (104) of diluting the second flow (18) downstream of the second outlet (14) of the filtration device (11).

9. The treatment method as claimed in any one of claims 7 or 8, **characterised in that** it comprises a step (105) of seeding the effluent (8) upstream of the filtration device (11) for particles with a diameter that is greater than a second previously defined diameter.

10. The treatment method as claimed in any one of claims 7 to 9, **characterised in that** it comprises:
• a step (106) of measuring the turbidity of the effluent (8) using a turbidity probe (41) positioned upstream of the inlet (12) of the primary filtration device (11);
• a step (107) of measuring the turbidity (49) of the first flow (17) using a turbidity probe (42) positioned downstream of the first outlet (13) of the primary filtration device (11);
• a step (108) of activating, intensity modulating or deactivating the separation device (21) using an activation pump (43);
• a step (109) of controlling the pump (43) for activating the separation device (21) as a function of the turbidity measurement (49) of the first flow (17) and/or of a difference between the turbidity measurement (49) of the first flow (17) and the turbidity measurement of the effluent (8).

11. The treatment method as claimed in claim 10, **characterised in that** it comprises a step (110) of computing, using a computer (47), treatment performance as a function of the turbidity measurement (49) of the first flow (17) and the turbidity measurement of the effluent (8), and **in that** the step (109) of controlling the activation pump (43) involves activating or increasing the frequency of the frequency converter of the activation pump (43) when the processing performance reaches a first predefined threshold value and involves deactivating or decreasing the frequency of the frequency converter of the activation pump (43) when the processing performance reaches a second threshold value.
